# EUROPÄISCHE PATENTSCHRIFT

(11) **EP 0 633 107 B1**
(45) Veröffentlichungstag und Bekanntmachung des Hinweises auf die Patenterteilung: **04.11.1998**
(21) Anmeldenummer: 94113985.9
(22) Anmeldetag: 12.08.1991
(51) Int. Cl.: B28B 21/92, B28B 21/94

(54) **Zementrohrbearbeitungsmaschine**
Apparatus for finishing concrete pipes
Dispositif pour la finition des tuyaux en béton

(30) Priorität: 13.08.1990 DE 4025603
(43) Veröffentlichungstag der Anmeldung: 11.01.1995
(62) Teilanmeldung aus: 91113493.0
(73) Patentinhaber: PT-Poly-Tec GmbH Vertrieb und Herstellung von Dichtungssystemen, 63150 Heusenstamm (DE)
(72) Erfinder: Preisendörfer, Gerhard, D-63150 Heusenstamm (DE)
(74) Vertreter: Blumbach, Kramer & Partner GbR

(56) Entgegenhaltungen:
- DE-A- 3 407 854
- FR-A- 1 174 234
- FR-A- 1 357 802
- GB-A- 603 913
- US-A- 2 451 713
- US-A- 3 202 190
- US-A- 3 382 309
- BETONWERK + BFT FERTIGTEIL-TECHNIK, Bd.60, Nr.4, April 1994, WIESBADEN , DE Seiten 148 - 150, XP441651 'SÄGEN - FRÄSEN - BOHREN KOMPLETTSYSTEM FÜR DIE BETONROHR- UND SCHACHTBEARBEITUNG'

## Beschreibung

Die Erfindung bezieht sich auf eine Vorrichtung zur Bearbeitung des Spitzendes von gegossenen Betonrohren nach dem Oberbegriff des Anspruches 1.

Eine Vorrichtung dieser Art ist aus US-A-3,202,190 bekannt. Ein Werkzeugträgerarm ist zu einem Zapfen drehbar gelagert, der übereinstimmend mit der Achse des Rohres gehalten wird, welches bearbeitet werden soll. Die Werkzeugverstelleinrichtung umfaßt eine Gewindestange, mit der ein Meißel als Werkzeug relativ zu dem Rohr verstellt werden kann. Die Bearbeitung des Spitzendes eines Betonrohres mit dieser Vorrichtung ist mühsam und beschwerlich.

Der motorische Antrieb von Asbestzementrohren und des Werkzeugs ist aus US-A-3,382,309 und DE-A-34 07 854 bekannt. Dabei wird das Asbestrohr zwischen drei Walzen oder Rollen am Umfang angetrieben, und der Werkzeugträgerarm wird mit dem rotierenden Werkzeug zu der zu bearbeitenden Umfangsstelle des Rohres zugestellt. Damit können die Enden von Asbestzementrohren bearbeitet werden, jedoch würde es Schwierigkeiten machen, ein gegossenes Betonrohr drehend anzutreiben, weil die Glockenmuffe nicht auf die Antriebswalzen oder -rollen aufgelegt werden kann, d.h. dieses Glockenmuffenende sich beim Drehen des Betonrohres als hinderlich erweisen würde. Abgesehen davon weisen gegossene Betonrohre eine ungleich schlechtere Formtreue auf als Asbestzementrohre, so daß der Drehantrieb am Außenumfang nicht sehr genau ist.

Das Sägen, Fräsen und Bohren von Betonrohren ist an sich bekannt (Betonwerk + Bft Fertigteil-Technik, Bd. 60, Nr. 4, April 1994, Wiesbaden, DE, Seiten 148 - 150).

Dichtungen bestehen normalerweise aus einem Elastomer, der eine gewisse Nachgiebigkeit zeigt, aber empfindlich gegenüber Beschädigungen durch scharfe Körner und dergleichen ist. Während man bei der Montage durch aufgebrachte Gleitmittel und dergleichen eine Beschädigung der Dichtung vermeiden kann, besteht die Beschädigungsgefahr effektiv bei nachträglichen Bewegungen der Rohre infolge Setzens des Bodens, bei unruhigem Untergrund oder bei Bergsenkungen.

Zur Erzielung einer guten Abdichtung zwischen benachbarten Betonrohren ist die Formhaltigkeit der Teile wichtig. Während man die Muffe mit der eingesetzten Dichtung formhaltig fertigen kann, weil der Beton im Bereich der Muffe durch ein Formwerkzeug bis zur ausreichenden Aushärtung gehalten wird, kann es bei der Herstellung der Spitzenden zu Unrundheiten kommen, insbesondere besteht die Neigung zur ovalen Verformung beim Ausschalen des Spitzendes im Zustand der "Grünstandfestigkeit". Wenn derartige Rohre verlegt werden, kann es Schwierigkeiten mit der Abdichtung geben, insbesondere wenn man an die Dauerhaftigkeit der Abdichtung denkt. Das elastomere Material der Dichtung wird mit der Zeit weniger nachgiebig und kann sich dann den Rohrbewegungen weniger gut anpassen, insbesondere wenn das Spitzende von der idealen runden Form abweicht.

Der Erfindung liegt die Aufgabe zugrunde, Maschinen anzugeben, die durch Bearbeitung des Spitzendes von Betonrohren den obengenannten Zielen dienen.

Die gestellte Aufgabe wird aufgrund der Merkmalskombination des Anspruchs 1 gelöst.

Deshalb wird nach dem Gießen und Erhärten des jeweiligen Betonrohres wenigstens die axiale Spitzendfläche mechanisch bearbeitet und anschließend eine Beschichtung aufgebracht. Die mechanische Bearbeitung kann in einem Abtrag vorstehenden Betons bzw. von Sandkornspitzen bestehen, es ist aber auch möglich, die mechanische Bearbeitung so weit zu treiben, daß der Rohbeton bis zum Erreichen einer rundzylindrischen, axialen Fläche abgetragen wird.

Je nach der vorgesehenen Anwendung der Betonrohre besteht die Beschichtung aus Wachs oder aus flüssigem, härtendem Kunststoff. Das Beschichtungsmaterial kann aufgesprüht und/oder aufgewalzt werden.

Die Vorrichtung zum Bearbeiten des Spitzendes von gegossenen Betonrohren ist als Schleif- oder Fräsmaschine vorgesehen, die einen Drehantrieb für Betonrohre und/oder für einen Umlaufarm aufweist. Am Arm ist ein Bearbeitungswerkzeug angebracht, das auf die gegenüberliegende und relativ zum Werkzeug sich drehende Spitzendfläche des Betonrohres einwirkt. Im Falle eines Schleif- oder Fräswerkzeuges trägt der Arm einen Rotationsantrieb für dieses mechanische Bearbeitungswerkzeug.

Das zusätzliche Werkzeug kann aus einer Auftragseinrichtung für Beschichtungsmaterial bestehen, praktisch also aus einer Sprühvorrichtung, die mit rotierenden Bürsten oder dergleichen oder mit Auftragswalzen kombiniert wird.

Wenn es sich nur darum handelt, vorstehenden Beton bzw. Sandkornspitzen abzutragen, kann der Arm zwei gegeneinander federvorgespannte Hebelarme aufweisen, wovon der eine umlaufend angetrieben und der andere Hebelarm am ersten angelenkt ist sowie an seinem Ende das mechanische Bearbeitungswerkzeug trägt.

Bei der Bearbeitung des Rohres kommt es darauf an, daß dieses zentrisch zu dem Bearbeitungswerkzeug angeordnet wird. Nachdem man störende Grate entfernt hat, kann man die Zentrierung an der Bohrung des Rohres orientieren. Zu diesem Zweck ist eine Zentriereinrichtung zum Eingriff in die Bohrung des in Bearbeitung stehenden Betonrohres vorgesehen.

Die Erfindung wird anhand der Zeichnung beschrieben.

Dabei zeigt:
Fig. 1 eine Seitenansicht einer schematisierten Schleifmaschine, teilweise geschnitten;
Fig. 2 eine Schnittansicht gemäß in Fig. 1 einer abgewandelten Schleifmaschine;
Fig. 3 eine weitere Ansicht einer abgewandelten Schleifmaschine;
Fig. 4 eine schematische Schnittansicht durch die Schleifmaschine nach Fig. 3;
Fig. 5 eine abgewandelte Einzelheit und
Fig. 6 einen Sprüharm.

Betonrohre weisen an einem Ende eine Glockenmuffe und am anderen Ende ein sogenanntes Spitzende 2 auf. Benachbarte Betonrohre werden unter Zwischenfügung einer Dichtung ineinandergesteckt, um einen Rohrstrang zu bilden.

Ineinandergesteckte, im Boden verlegte Betonrohre unterliegen häufig Setzungsbewegungen, die nicht völlig gleichmäßig erfolgen. Wenn die Achsen der Betonrohre zunächst auf einer fluchtenden Linie gelegen sind, dann gibt es häufig nach der Setzbewegung einen gewissen Knick, der beispielsweise dazu führt, daß eine Seite des Spitzendes 2 sich an der radialen Ringfläche der Muffe abstützt und die andere Seite des Spitzendes sich dem axial erstreckenden Wandbereich der Muffe annähert.

Deshalb kommt es bei Winkelbewegungen zwischen den beiden benachbarten Betonrohren auch zu einer Verschiebung von Teilen des Spitzendes gegenüber von Teilen der Muffe, d.h. eine Seite des Spitzendes rutscht ein wenig aus der Muffe heraus. Diese Schrägstellung führt dazu, daß die Dichtung nicht mehr entlang einer Kreisringfläche, sondern einer elliptischen Fläche abdichten muß. Die besondere Konstruktion als Lippenpreßdichtung und das angewendete Material (Elastomer) sorgen für eine genügend federnde Nachgiebigkeit der Dichtung, so daß trotz des sich bewegenden Spaltes 15 die Dichtwirkung erhalten bleibt. Wie noch beschrieben wird, wird eine Abdeckung oder Beschichtung solcher Länge gewählt, daß auch bei einem verschwindend kleinen Spalt jedenfalls eine Überdeckung mit der Dichtung aufrechterhalten bleibt.

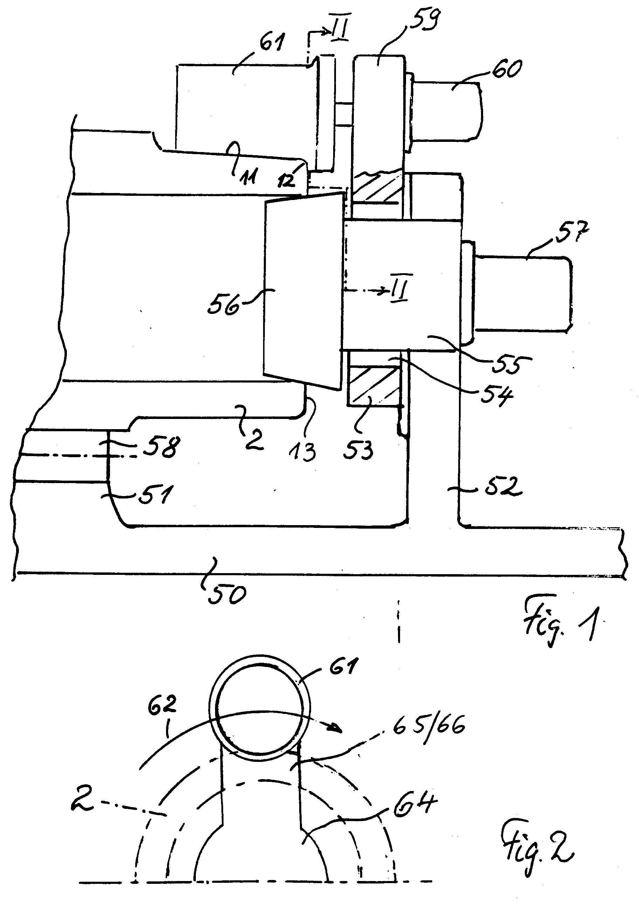

Das Spitzende 2 weist eine sich axial erstreckende Ringfläche 11, eine Übergangkrümmung 12 und eine radiale Ringfläche 13 auf, siehe Fig. 1. Man bemüht sich, die Flächen 11 bis 13 genau rund umlaufend zu fertigen, indem beim Entmanteln des "grünen" Betonrohres besonders sorgfältig umgegangen wird. Auf höhere Genauigkeitsgrade kommt man, indem diese Flächen überschliffen oder rundgefräst werden, wie anhand der Fig. 1 bis 6 erläutert wird.

Fig. 1 bis 6 zeigen Vorrichtungen zur Bearbeitung des Spitzendes 2 von Betonrohren. Das Maschinengestell 50 weist einen Werkstücktisch 51 und einen Ständer 52 auf. Am Ständer ist ein Schlitten 53 zur Einstellung von Achsabständen verstellbar und feststellbar geführt. Der Schlitten 53 weist ein Langloch 54 auf, durch das ein Drehzapfen 55 hindurchreicht, der am Ende einen Zentrierkonus 56 trägt. Der Drehzapfen 55 kann von einem Zentralantrieb 57 angetrieben werden. Am Werkstücktisch 51 sind V-förmig zueinander angeordnete Rollen 58 vorgesehen, auf denen das zu bearbeitende Betonrohr so aufgelegt wird, daß das Spitzende 2 am Zentrierkonus 56 angekoppelt werden kann. Auf diese Weise kann mit dem Zentralantrieb 57 das in Bearbeitung stehende Betonrohr gedreht werden. Am Schlitten 53 ist ein Arm 59 angebracht, der einen Schleifscheibenantrieb 60 für eine Formschleifscheibe 61 trägt. Damit kann die für die Dichtungwirkung bedeutsame Fläche 11 und die Übergangsabrundung 12 des Spitzendes bearbeitet werden.

Der Zentralantrieb 57 kann auch durch einen Antrieb über die Rollen 58 ersetzt werden. In einem solchen Fall ist der Zentrierkonus 56 drehbar zu dem Zapfen 55 gelagert.

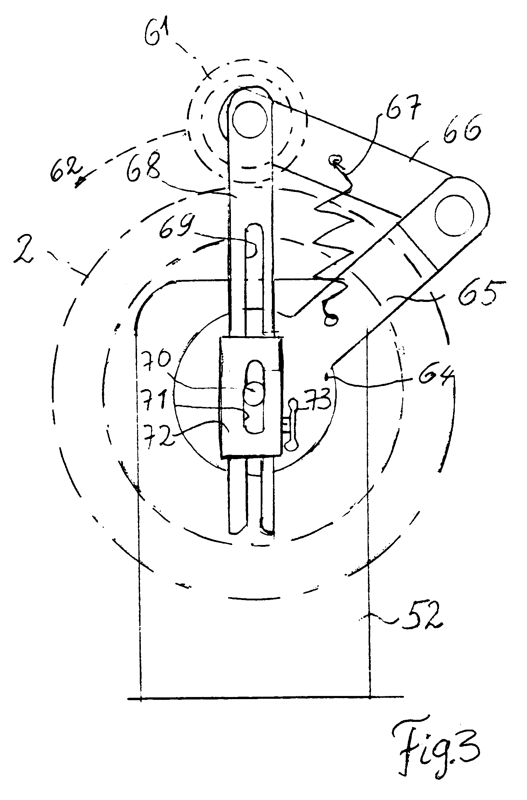

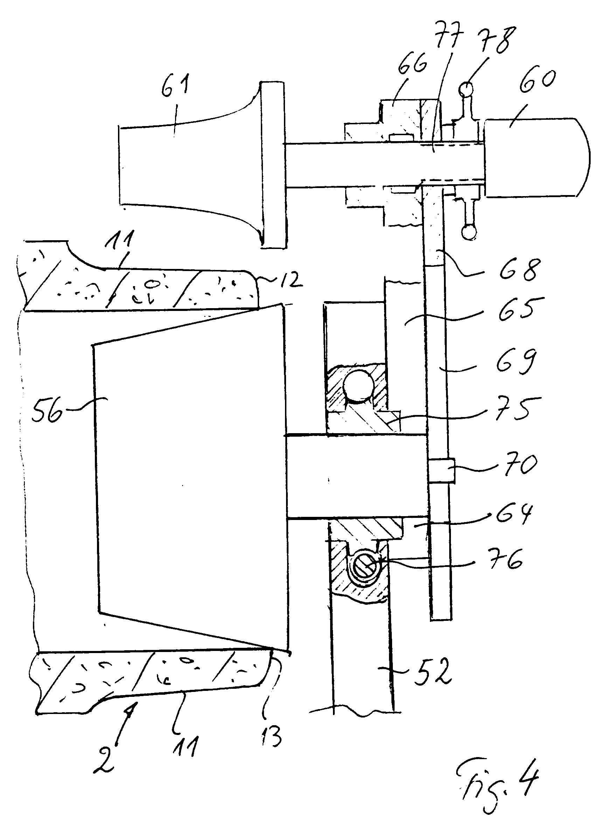

Fig. 2 und 3 zeigen eine weitere Abwandlung der Bearbeitungsvorrichtung nach Fig. 1. Anstelle des Drehantriebes des Betonrohres kann auch das Werkzeug 61 (Formschleifscheibe, Formfräser) entlang einer Kreisbahn 62 um das Spitzende 2 des Betonrohres herum angetrieben werden. Zu diesem Zweck ist eine Nabe 64 am Ständer 52 drehbar gelagert und trägt einen Gelenkarm aus Teilen 65 und 66, die mittels einer Feder 67 gegeneinander vorgespannt sind.

Diese Konstruktion kann im übrigen auch für den Arm 59 in Fig. 1 verwendet werden, um das Werkzeug 61 federnd an die Oberfläche des Betonrohres anzulegen, wenn es sich darum handelt, vorstehende Spitzen und Rauhigkeiten der Betonoberflächen zu beseitigen.

Die Beweglichkeit der Hebelarme 65 und 66 kann durch eine Koppelschwinge 68 begrenzt werden. Zu diesem Zweck weist die Koppelschwinge 68 einen Führungsschlitz 69 für einen am Hebelarm 65 befestigten Stift 70 auf, der innerhalb eines Langlochs 71 gleiten kann. Das Langloch 71 gehört einem Feststellschieber 72 an, der längs der Koppelstange 68 verschoben und mittels einer Klemmschraube 73 festgestellt werden kann. Mittels des Feststellschiebers 72 läßt sich der Radius genau einstellen, bis auf welchen das Betonrohr 2 außen abgeschliffen werden kann.

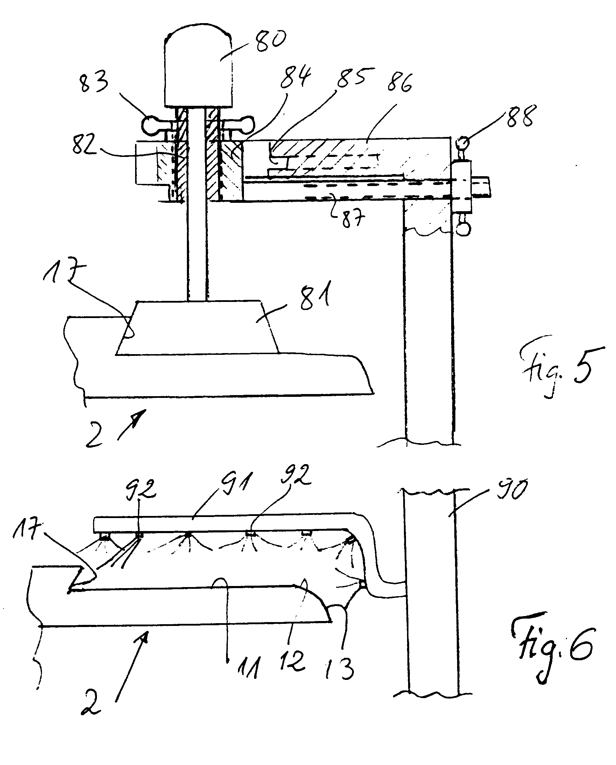

Fig. 4 zeigt skizzenmäßig, wie der Antrieb der Bearbeitungsmaschine nach Fig. 3 gestaltet sein kann. Zum Rundlaufantrieb des Hebelarms 65 kann ein Schneckengetriebe mit einem Schneckenrad 75 und einer Schneckenwelle 76 benutzt werden, die im Ständer 52 gelagert sind. Das Schneckenrad 75 ist mit der Nabe 64 verbunden. Der die Schneckenwelle 76 antreibende Motor ist nicht dargestellt. Das Schneckengetriebe ermöglicht eine starke Untersetzung der Motorantriebszahl, wie es erwünscht ist.

Um das Werkzeug 61 an das Spitzende 2 richtig stellen zu können, ist ein Spindelantrieb, enthaltend eine Hohlspindel 77 und ein Handrad 78, vorgesehen. Damit kann die Schleifscheibe 61 in axialer Richtung verstellt werden. Die radiale Verstellung erfolgt, wie im Zusammenhang mit Fig. 3 beschrieben, über die Teile 65 bis 68. Der Motor 60 treibt das Werkzeug 61 über eine nicht dargestellte, im Inneren der Hohlspindel 77 laufende Welle an.

Mitunter ist es erwünscht, am Spitzende 2 eine hinterschnittene Schulter 17 (Fig. 5 und 6) vorzusehen, die einen sicheren Halt für eine aufgebrachte Dichtung bietet, wenn das Spitzende in das Glockenmuffenende eingeschoben wird. Fig. 5 zeigt, wie man eine solche hinterschnittene Schulter 17 durch Beschleifen einer vorgeformten Schulter herstellen kann. Zu diesem Zweck treibt ein Motor 80 eine kegelstumpfförmige Fräs- oder Schleifscheibe 81 an, die radial und axial an das Werkstück 2 angestellt werden kann. Die Verstelleinrichtungen sind schematisch dargestellt und enthalten jeweils eine Spindel 82 bzw. 87, ein Verstellrad 83 bzw. 88 und einen Führungsblock 84, der die Hohlspindel 82 aufnimmt und mit Längsführungen 85 zusammenarbeitet, die in einem Maschinenarm 86 vorgesehen sind. Die Spindel 87 ist mit dem Führungsblock 84 verbunden und treibt diesen längs der Führung 85 an, wenn das Handrad 88 gedreht wird. In ähnlicher Weise läßt sich durch Drehen des Handrades 88 die Spindel 82 in radialer Richtung verstellen und damit auch das Werkzeug 81. Nicht dargestellte Antriebseinrichtungen dienen dazu, das Werkstück 2 und den Arm 86 relativ zueinander zu drehen, wobei man sich der Prinzipien bedienen kann, wie mit Bezug auf Fig. 1 bis 4 beschrieben.

Fig. 6 zeigt den umlaufenden Arm 90 einer Wachs- oder Kunststoffauftragmaschine, an welchem ein gekrümmtes Rohr 91 mit Düsenöffnungen 92 angebracht ist. Der Drehantrieb des Arms 90 kann ähnlich gestaltet sein, wie im Zusammenhang mit Fig. 4 beschrieben. In der Tat kann sogar der gleiche Antrieb verwendet werden, d.h. der Arm 90 ist an der gleichen Nabe 64 befestigt wie der Arm 65. Bei einer derartigen Anordnung kann man im übrigen als Werkzeug 61 eine antriebslos mitlaufende oder langsam angetriebene Glättwalze verwenden, um das aufgetragene Wachs bzw. den Kunststoff zu glätten und eine runde Oberfläche 11 des Spitzendes zu erzielen. Auch rotierende Bürsten sind als Werkzeug 61 geeignet.

Der Zentrierkonus 56 kann auch als Spannkonus ausgebildet sein, der nicht am äußersten Ende der Rohrbohrung angreift, sondern das Betonrohr etwas weiter innen erfaßt, so daß die Fläche 13 des Spitzendes 2 für eine Bearbeitung frei zugänglich ist.

Die mit Fig. 1 bis 6 dargestellten Bearbeitungsmaschinen können für Rohre verwendet werden, wenn es sich nur darum handelt, hervorstehende Sandkörner zu entfernen, die sonst durch aufgetragenes Gleitmittel nicht ausreichend abgedeckt wären. In diesem Fall wird die Schleifmaschine im Arbeitstakt der Überprüfung und Entgratung der Spitzenden der Betonrohre eingesetzt. In der Praxis wird man die Schleif- oder Frässcheibe hinsichtlich der Breite und Form den Flächen 11 und 12 des Spitzendes anpassen und einige wenige Umdrehungen umlaufen lassen.

In jedem Fall ist der Auftrag von Wachs, flüssigem Kunststoff oder dergleichen auf dem Spitzende vorteilhaft, um eventuelle Lunkerstellen auszufüllen und so eine Wasserdurchlässigkeit unterhalb der Dichtlippe der Dichtung zu verhindern. Ferner wird durch die geeignete Auswahl des aufgesprühten Materials die Reibung beim Ineinanderschieben von Spitzende und Glockenmuffenende der Betonrohre verringert. Dadurch kann auf jeden Fall an hochwertigem Gleitmittel gespart werden, es ist sogar denkbar, daß man ohne Gleitmittel auskommt.

Der Auftrag auf dem Spitzende kann auch so dick sein, daß man eine Bedeckung im Sinne einer Beschichtung oder Auskleidung erhält, die zusammen mit einer Rohrbohrungsauskleidung (Inliner-Rohr) und einer Glockenmuffenauskleidung einen kompletten Korrosionsschutz für die Betonrohre ergibt.

## Patentansprüche

1. Vorrichtung zur Bearbeitung des Spitzendes von gegossenen Betonrohren, die eine Glockenmuffe, einen Rohrschaft und ein Spitzende aufweisen, mit folgenden Merkmalen:
wenigstens ein Werkzeugträgerarm (59; 65, 66; 86, 90);
ein Drehantrieb (57; 58; 64; 75, 76) zur Relativdrehung eines Betonrohres zu dem Werkzeugträgerarm;
Werkzeuge (61, 81, 91, 92) zur Bearbeitung des Betonrohres, die am Werkzeugträgerarm angebracht sind und ein Bearbeitungswerkzeug (61, 81) umfassen, das wenigstens zur glättenden mechanischen Bearbeitung der Oberfläche des Spitzendes (2) ausgebildet ist,
Werkzeugverstelleinrichtungen (53; 68, 69, 70, 71, 72, 73; 82, 83; 84, 85, 88) am Werkzeugträgerarm,
dadurch gekennzeichnet,
daß die Werkzeuge ein Beschichtungswerkzeug (91, 92) umfassen, das eine Kunststoffauftragseinrichtung mit nachfolgender Glätteinrichtung darstellt.

2. Vorrichtung nach Anspruch 1,
dadurch gekennzeichnet, daß die Auftragseinrichtung wenigstens eine am Werkzeugträgerarm mitgeführte Walze und/oder eine mitgeführte, rotierende Bürste als Glätteinrichtung aufweist.

3. Vorrichtung nach Anspruch 1 oder 2,
dadurch gekennzeichnet, daß die Auftragseinrichtung wenigstens ein Rohr (91) mit Düsen (92) aufweist, wobei das Rohr (91) entsprechend der Form des Spitzendes (2) gekrümmt und die Düsen (92) auf die Flächen des Spitzendes (2) hin ausgerichtet sind.

4. Vorrichtung nach einem der Ansprüche 1 bis 3,
dadurch gekennzeichnet, daß der Werkzeugträgerarm zwei federvorgespannte Hebelarme (65, 66) besitzt, wovon der eine (65) umlaufend angetrieben und der andere Hebelarm (66) am ersten angelenkt ist sowie an seinem Ende ein Werkzeug (61) trägt.

5. Vorrichtung nach einem der Ansprüche 1 bis 4,
dadurch gekennzeichnet, daß die Verstelleinrichtung (82, 83, 84, 85, 88) sowohl zur axialen als auch radialen Verstellung des Bearbeitungswerkzeuges (81) ausgebildet ist.

6. Vorrichtung nach Anspruch 5,
dadurch gekennzeichnet, daß das Bearbeitungswerkzeug (81) aus einer kegelstumpfförmigen Fräs- oder Schleifscheibe besteht, die zur Erzeugung einer hinterschnittenen Schulter (17) des Spitzendes (2)geführt werden kann.

7. Vorrichtung nach einem der Ansprüche 1 bis 6,
dadurch gekennzeichnet, daß der Werkzeugträgerarm (59; 65, 66; 86, 90) um das Spitzende (2) umlaufend antreibbar ist.

8. Vorrichtung nach Anspruch 7,
dadurch gekennzeichnet, daß koaxial zur Drehachse des Werkzeugträgerarmes (59; 65, 66) ein Zentrierkonus (56) angeordnet ist, der in die Rohrbohrung des zu bearbeitenden Spitzendes (2) eingreift.

9. Vorrichtung nach einem der Ansprüche 1 bis 8,
dadurch gekennzeichnet, daß das Bearbeitungswerkzeug als Formschleifscheibe (61) zum Überschleifen der Oberfläche (11) des Spitzendes (2) des Betonrohres ausgebildet ist.

## Claims

1. Apparatus for dressing the spigot end of cast concrete pipes, which comprise a socket, a pipe length and a spigot end, with the following features:
at least one tool support arm (59; 65; 66; 86, 90);
a rotary drive (57; 58; 64; 75; 76) for rotation of the concrete pipe relative to the tool support arm;
tools (61, 81, 91, 92) for dressing the concrete pipe, which are fitted on the tool support arm and include a dressing tool (61, 81) which is adapted at least for smoothing mechanical dressing of the surface of the spigot end (2),
tool adjustment devices (53; 68, 69, 70, 71, 72, 73; 82, 83; 84, 85, 88) on the tool support arm,
characterized in that,
the tools include a coating tool (91, 92) which forms a plastics application device with a following smoothing device.

2. Apparatus according to claim 1, characterized in that the application device comprises at least one roller entrained on the tool support arm and/or an entrained, rotating brush as a smoothing device.

3. Apparatus according to claim 1 or 2, characterized in that the application device comprises at least one tube (91) with nozzles (92), wherein the tube (91) is curved in accordance with the shape of the spigot end (2) and the nozzles are directed on to the surfaces of the spigot end (2).

4. Apparatus according to any of claims 1 to 3, characterized in that the tool support arm has two spring biased lever arms (65, 66), of which the one (65) is driven in rotation and the other lever arm (66) is pivoted on the first and carries a tool (61) at its end.

5. Apparatus according to any of claims 1 to 4, characterized in that the adjustment device (82, 83, 84, 85, 88) is designed for adjustment of the dressing tool (81) both axially and radially.

6. Apparatus according to claim 5, characterized in that the dressing tool (81) consists of a frustro-conical cutting or grinding wheel, which can be guided to form an undercut shoulder (17) of the spigot end (2).

7. Apparatus according to any of claims 1 to 6, characterized in that the tool support arm (59; 65, 66; 86, 90) can be driven around the spigot end (2).

8. Apparatus according to claim 7, characterized in that the a centring cone (56) is arranged coaxial with the axis of rotation of the tool support arm (59; 65; 66) and engages in the pipe bore of the spigot end (2) to be dressed.

9. Apparatus according to any of claims 1 to 8, characterized in that the dressing tool is in the form of a profile grinding wheel (61) for grinding the surface (11) of the spigot end (2) of the concrete pipe.

## Revendications

1. Dispositif d'usinage du bout mâle de tuyaux en béton coulés qui comportent un emboîtement en cloche, un corps de tuyau et un bout mâle, comportant les particularités suivantes :
au moins un bras porte-outil (59 ; 65, 66 ; 86, 90) ;
des moyens d'entraînement en rotation (57 ; 58 ; 64 ; 75, 76) permettant une rotation relative d'un tuyau en béton par rapport au bras porte-outil ;
des outils (61, 81, 91, 92), servant à usiner le tuyau en béton, qui sont montés sur le bras porte-outil et comportent un outil d'usinage (61, 81) qui est agencé de façon à réaliser au moins l'usinage mécanique égalisateur de la surface du bout mâle (2) ;
des moyens de réglage d'outil (53 ; 68, 69, 70, 71, 72, 73 ; 82, 83 ; 84, 85, 88) situés sur le bras porte-outil,
caractérisé
en ce que les outils comprennent un outil de revêtement (91, 92) qui constitue des moyens de dépôt de matière plastique comportant des moyens d'égalisation disposés à la suite.

2. Dispositif suivant la revendication 1, caractérisé en ce que les moyens de dépôt comprennent au moins un cylindre entraîné en même temps sur le bras porte-outil et/ou une brosse rotative entraînée en même temps servant de moyens d'égalisation.

3. Dispositif suivant la revendication 1 ou 2, caractérisé en ce que les moyens de dépôt comprennent au moins un tube (91) comportant des buses (92), le tube (91) étant incurvé d'une manière correspondant à la forme du bout mâle (2) et les buses (92) étant dirigées sur les surfaces du bout mâle (2).

4. Dispositif suivant l'une des revendications 1 à 3, caractérisé en ce que le bras porte-outil comporte deux bras de levier (65, 66) soumis à une précontrainte élastique dont l'un (65) est entraîné suivant un mouvement de révolution et l'autre bras de levier (66) est articulé sur le premier et porte à son extrémité un outil (61).

5. Dispositif suivant l'une des revendications 1 à 4, caractérisé en ce que les moyens de réglage (82, 83, 84, 85, 88) sont réalisés aussi bien pour un réglage axial qu'un réglage radiale de l'outil d'usinage (81).

6. Dispositif suivant la revendication 5, caractérisé en ce que l'outil d'usinage (81) est constitué d'une fraise ou meule tronconique qui peut être guidée de façon à produire un épaulement en contre-dépouille (17) du bout mâle (2).

7. Dispositif suivant l'une des revendications 1 à 6, caractérisé en ce que le bras porte-outil (59 ; 65, 66 ; 86, 90) peut être entraîné suivant un mouvement de révolution autour du bout mâle (2).

8. Dispositif suivant la revendication 7, caractérisé en ce qu'il est prévu, disposé coaxialement à l'axe de rotation du bras porte-outil (59 ; 65, 66), un cône de centrage (56) qui s'emboîte dans l'alésage de tuyau du bout mâle (2) à usiner.

9. Dispositif suivant l'une des revendications 1 à 8, caractérisé en ce que l'outil d'usinage est réalisé sous forme d'une meule de forme (61) servant à un meulage de finition de la surface (11) du bout mâle (2) du tuyau en béton.
